# EUROPÄISCHE PATENTSCHRIFT

(11) **EP 1 602 141 B1**
(45) Veröffentlichungstag und Bekanntmachung des Hinweises auf die Patenterteilung: **23.12.2009**
(21) Anmeldenummer: 04709575.7
(22) Anmeldetag: 10.02.2004
(51) Int. Cl.: H01M 8/24, H01M 8/06, H01M 8/04, H01M 8/12

(54) **MODULAR AUFGEBAUTES HOCHTEMPERATUR-BRENNSTOFFZELLENSYSTEM**
MODULARLY BUILT HIGH-TEMPERATURE FUEL CELL SYSTEM
SYSTEME DE PILES A COMBUSTIBLE A HAUTE TEMPERATURE DE STRUCTURE MODULAIRE

(30) Priorität: 12.03.2003 DE 10310642
(43) Veröffentlichungstag der Anmeldung: 07.12.2005
(73) Patentinhaber: Forschungszentrum Jülich GmbH, 52425 Jülich (DE)
(72) Erfinder: BLUM, Ludger, 52428 Jülich (DE); PETERS, Roland, 52441 Linnich (DE); PETERS, Ralf, 52080 Aachen (DE)
(86) Internationale Anmeldenummer: PCT/DE2004/000229
(87) Internationale Veröffentlichungsnummer: WO 2004/082057

(56) Entgegenhaltungen:
- EP-A- 0 384 944
- EP-A- 1 347 529
- DE-A- 10 121 666
- DE-A- 19 716 438
- US-A- 5 587 251

## Beschreibung

Die Erfindung betrifft ein Hochtemperatur-Brennstoffzellensystem umfassend einen Hochtemperatur-Brennstoffzellenstapel sowie weitere damit im Zusammenhang stehende Bauteile, nämlich einen Nachverbrenner, einen Reformer und einen Wärmetauscher, wobei diese Bauteile jeweils eine sehr kompakte Bauart aufweisen.

### Stand der Technik

Hochtemperatur-Brennstoffzellenstapel werden in der Regel aus aufeinander gestapelten einzelnen Brennstoffzellen aufgebaut. Durch optimierte gemeinsame Zu- und Abführungen für das Brenngas sowie für das Oxidationsgas sind sehr kompakte Bauformen möglich.

Bei einer Hochtemperatur-Brennstoffzelle wird regelmäßig nur ein Teil des Brenngases elektrochemisch in der Zelle umgesetzt. Das nicht umgesetzte Brenngas (ca. 10 bis 30 %) wird üblicherweise mit der heißen Abluft aus dem Kathodenraum nachverbrannt. Dazu sind aus der Literatur separate Apparate bekannt, in denen das nicht umgesetzte Anodenabgas mit Luft umgesetzt, und so nachverbrannt wird. Dadurch wird einerseits verhindert, dass nicht umgesetztes Brenngas in die Atmosphäre gelangt. Andererseits wird durch die Nachverbrennung die Energie aus dem restlichen Brenngas komplett für Heizzwecke oder auch in anderen nachgeschalteten Komponenten, beispielsweise einer Gasturbine, genutzt.

Das durch die Bauart bedingte Volumen solcher separaten Nachverbrenner ist nachteilig sehr groß und erfordert beim Einbau in ein Hochtemperatur-Brennstoffzellensystem einen erheblichen Verrohrungs- und Isolationsaufwand.

Ferner ist bekannt, dass bei Hochtemperatur-Brennstoffzellen die Luft bzw. das Oxidationsgas für die Kathodenseite des Stapels vorgewärmt werden muss. Dazu wird in der Regel das Oxidationsgas in einem Rekuperator durch das heiße Abgas eines Hochtemperatur-Brennstoffzellenstapels oder eines Nachverbrenners auf die erforderliche Stapeleintrittstemperatur vorgewärmt. Für den dabei stattfindenden Wärmeaustausch sind Rohrbündel-Wärmeüberträger oder Plattenwärmeaustauscher in geschweißter Ausführung geeignet, die als konventionelle Anlagen aus hochwarmfesten Legierungen im Handel erhältlich sind. Der Einbau dieser separaten Apparate in ein Hochtemperatur-Brennstoffzellensystem ist nachteilig mit erheblichem Verrohrungs- und Isolationsaufwand behaftet.

Ferner ist bei Hochtemperatur-Brennstoffzellen bekannt, dass beim Betrieb mit Erdgas zumindest ein Teil dieses Gases, insbesondere die im Erdgas enthaltenen höheren Kohlenwasserstoffe, vor dem Eintritt in die Brennstoffzelle bzw. den Anodenraum reformiert werden müssen.

Zur Durchführung einer Reformierung sind aus der Literatur röhrenförmige Reaktoren mit Schüttungen aus Katalysatorpellets bekannt. Es ist ebenfalls bekannt, solche Pellets auch in Plattenwärmeaustauscher einzubauen, um so definierte Strömungsverhältnisse und bessere Wärmeübergänge zu erzielen. Solche Reformer weisen ähnlich wie die aus dem Stand der Technik bekannten Nachverbrenner den Nachteil auf, dass sie bauartbedingt große Volumina aufweisen und beim Einbau in ein Hochtemperatur-Brennstoffzellensystem ein erheblicher Verrohrungs- und Isolationsaufwand betrieben werden muss.

Aus EP 0 384 944 ist ein Hochtemperatur-Brennstoffzellenstapel bekannt, der am unteren Ende eine Reformer/Nachbrenner-Kombination und einen Wärmetauscher zum Vorwärmen des Brennstoffs aufweist. Am oberen Ende des Hochtemperatur-Brennstoffzellenstapels befindet sich ebenfalls ein Wärmetauscher zum Vorwärmen von Luft. Die Kontaktflächen der modulartig aufgebauten Bauteile sind dabei jeweils identisch.

Ferner ist in DE 101 216 66 A1 eine Hochtemperatur-Brennstoffzelle beschrieben, die mit einem Wärmetauscher in direktem Kontakt steht. Die Abmessungen der aneinander grenzenden Flächen des Wärmetauschers und der Hochtemperatur-Brennstoffzelle sind identisch. Des Weitern unterstützt ein integrierter Nachbrenner die angestrebte Erwärmung der einströmenden Reaktionsluft.

### Aufgabe und Lösung

Aufgabe der Erfindung ist es, ein kompaktes Hochtemperatur-Brennstoffzellensystem mit einem Brennstoffzellenstapel und wenigstens einem zusätzlichen Bauteil zur Verfügung zu stellen, bei dem vorteilhaft das zusätzliche Bauteil modular und in sehr kompakter Weise in das Brennstoffzellensystem integriert werden kann.

### Gegenstand der Erfindung

Im Rahmen der Erfindung wurde gefunden, dass es vorteilhaft für den Bau und den Betrieb eines Hochtemperatur-Brennstoffzellensystems ist, zusätzliche, bislang separat aufgebaute Bauteile, nämlich einen Nachverbrenner, einen Reformer und einen Wärmetauscher, direkt an einen Hochtemperatur-Brennstoffzellenstapel anzuordnen. Die Anbindung dieser Bauteile erfolgt entweder direkt oder über geeignete Zwischenverbindungen, insbesondere in Form von Zwischenplatten. Die Geometrie der Bauteile und der Zwischen-, bzw. Abschlussplatten, insbesondere die äußeren Abmessungen, ist bzw. sind an die Geometrie des Brennstoffzellenstapels in geeigneter Weise angepasst.

Auf diese Weise wird eine Kombination aus mehreren Bauteilen, nämlich Nachverbrenner, Vorwärmer und Vorreformer an den Hochtemperatur-Brennstoffzellenstapel angekoppelt. Da alle diese Bauteile die vorteilhafte kompakte und an den Hochtemperatur-Brennstoffzellenstapel angepasste Bauweise aufweisen, ergibt sich für das erfindungsgemäße gesamte Hochtemperatur-Brennstoffzellensystem regelmäßig eine besonders kompakte und damit vorteilhafte Bauform. Der Verrohrungsaufwand für die zusätzlichen Bauteile fällt nahezu weg und der Wärmeverlust wird deutlich reduziert. Damit ist die erfindungsgemäße Ausführung eines Hochtemperatur-Brennstoffzellensystems sowohl preiswerter, als auch deutlich effektiver als die aus dem Stand der Technik bekannten Anordnungen.

Die Strömungszu- und -abführungskanäle für die Betriebsmittel und/oder Abgase des zusätzlichen Bauteils sind direkt an den Hochtemperatur-Brennstoffzellenstapel angepasst, so dass das Bauteil in direktem Kontakt zu einem Hochtemperatur-Brennstoffzellenstapel angeordnet werden kann. An der dem Hochtemperatur-Brennstoffzellenstapel abgewandten Seite weist das zusätzliche Bauteil entsprechende Anschlussstücke der Kanäle für die Betriebsmittel und/oder Abgase zur weiteren Verrohrung innerhalb des Brennstoffzellensystems auf.

Eine alternative Ausführungsform der Erfindung sieht vor, dass das zusätzliche Bauteil über eine Zwischenplatte mit dem Hochtemperatur-Brennstoffzellenstapel verbunden ist. Die Zwischenplatte übernimmt dann vorteilhaft die Funktion der Überbrückung bzw. Umlenkung zwischen den Strömungskanälen des Hochtemperatur-Brennstoffzellenstapels und dem Bauteil.

Ferner sieht eine weitere Ausführungsform der Erfindung vor, dass der Anschluss der Kanäle für die Betriebsmittel und/oder Abgase des Bauteils zur weiteren Verrohrung innerhalb des Brennstoffzellensystems über eine Abschlussplatte erfolgt.

Durch geschickte Kombination der einzelnen Bauteile wird zudem eine Steigerung der Effizienz ermöglicht. Die Erfindung sieht einen Hochtemperatur-Brennstoffzellenstapel vor, an den, evtl. über eine Zwischenplatte, zunächst ein Nachverbrenner angekoppelt ist. Durch weitere Ankopplung eines Luftvorwärmers und eines Vorreformers wird der Wärmeübergang konsequent optimal genutzt.
Zudem ist eine preiswertere Herstellung dieser Bauteile im Vergleich zum bisherigen Stand der Technik möglich, da die äußeren Abmessungen der Bauteile und.die Orte für die Durchführungen von Betriebsstoffen und Gasen bei allen Bauteilen gleich oder zumindest sehr ähnlich ausgestaltet sind, was die Anzahl identischer Bauteile erhöht.

### Spezieller Beschreibungsteil

Nachfolgend wird der Gegenstand der Erfindung anhand von Figuren und speziellen Ausführungsformen näher erläutert, ohne dass der Gegenstand der Erfindung dadurch beschränkt wird.

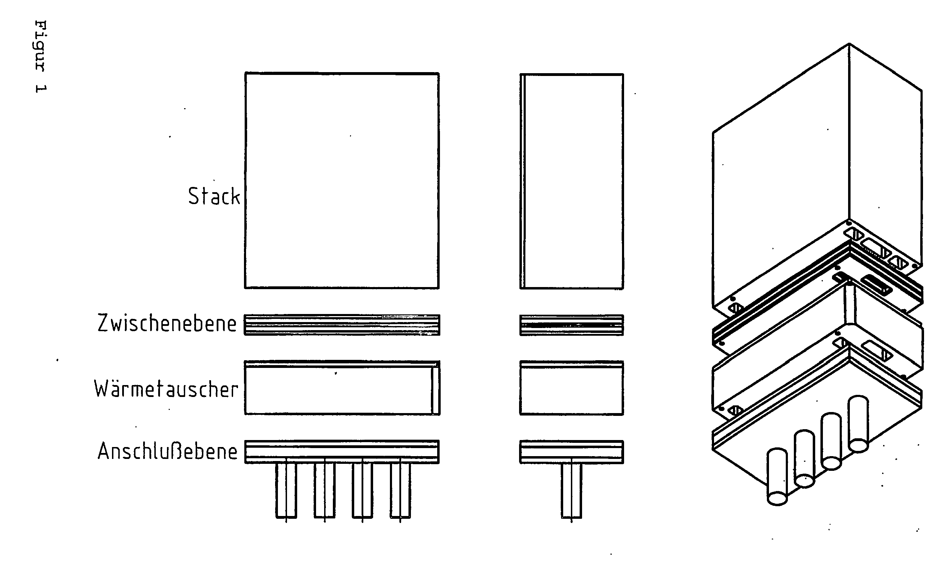

Es zeigen dabei
- Figur 1:: Schemazeichnung für Hochtemperatur-Brenn- stoffzellenstapel mit einem zusätzlichen Bau- teil, welches an der einen Seite über eine Zwischenplatte an den Hochtemperatur-Brenn- stoffzellenstapel angrenzt und an der anderen Seite eine Abschlussplatte aufweist.
- Figur 2a:: Schemazeichnung eines zusätzlichen Bauteils mit der Funktion eines Nachverbrenners.
- Figur 2b:: Schemazeichnung eines zusätzlichen Bauteils mit der Funktion eines Nachverbrenners mit porösem Material.
- Figur 3a:: Schemazeichnung eines zusätzlichen Bauteils mit der Funktion eines beheizten Vorrefor- mers.
- Figur 3b:: Schemazeichnung eines zusätzlichen Bauteils mit der Funktion eines unbeheizten Vorrefor- mers.
- Figur 3c:: Schemazeichnung eines zusätzlichen Bauteils mit der Funktion eines weiteren beheizten Vorreformers.
- Figur 4a, b, c, d:: Schemazeichnung eines erfindungsgemäßen Hochtemperatur-Brennstoffzellensystems mit einem Hochtemperatur-Brennstoffzellenstapel und einer Kombination von drei zusätzlichen Bauteilen, die direkt an den Hochtemperatur- Brennstoffzellenstapel angrenzen, wobei die Ausführungen a), b), c) und d) unterschiedli- che, vorteilhafte Gasführungen innerhalb des Brennstoffzellensystems zeigen.

### Nachverbrenner als zusätzliches, direkt an den Hochtemperatur-Brennstoffzellenstapel angeschlossenes Bauteil.

Die kompakte Bauweise eines Nachbrenners erlaubt es, den Stapel direkt - ohne zusätzliche Verrohrung und Isolation - an den Nachverbrenner anzukoppeln. Hierdurch entsteht ein sehr kompakter Aufbau mit reduzierter Oberfläche (geringerer Wärmeverlust, geringeres Volumen und Gewicht und damit geringere Kosten) und einfacher Ankopplung an den Stapel. Abgas und Abluft werden in einer Art porösem plattenförmigen Aufbau zusammengebracht, in dem sie kontrolliert verbrennen. Die Verbrennungstemperatur wird über den Luftüberschuss geregelt (evtl. durch Zudosierung von kalter Frischluft). Normalerweise läuft die Verbrennung spontan ab (d. h. ohne zusätzliche Zündquelle), da die Temperatur des Gemisches am Austritt des Hochtemperatur-Brennstoffzellenstapels oberhalb der Zündtemperatur der beteiligten Brenngase (vor allem H₂, CO, CH₄) liegt. Für den Fall, dass die Temperatur zu niedrig ist (Wärmeverluste, weiter reduzierte Betriebstemperatur der Hochtemperatur-Brennstoffzelle) kann die Oberfläche im Verbrennungsraum mit Edelmetall (vorzugsweise Platin) beschichtet werden.

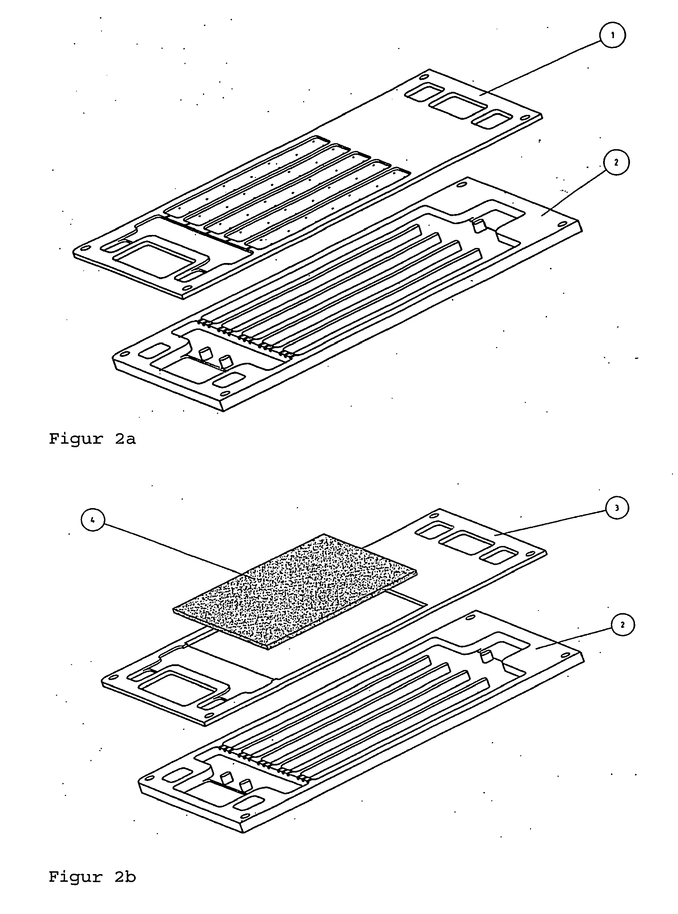

Die Figuren 2a und 2b zeigen ein zusätzliches Bauteil für einen Hochtemperatur-Brennstoffzellenstapel mit der Funktion eines Nachbrenners. Der Nachverbrenner besitzt einen plattenförmigen Aufbau. Dabei wechseln sich je eine Abgas- und Abluftebene ab.

In Figur 2a besteht die Abgasebene 1 aus einer Metallplatte, in der Gasverteilerstrukturen und Strömungskanäle eingearbeitet sind. Das Anodenabgas aus dem Stapel wird über den Gasverteilerraum, der für eine gleichmäßige Strömungsverteilung sorgt, in ausgefräste Kanäle geleitet. In diesen Kanälen wird das Abgas gleichmäßig verteilt. Es sind dort eine größere Anzahl von kleinen Bohrungen eingearbeitet, durch die das Anodenabgas in die darunter liegende Abluftplatte geleitet wird. Über den Bohrungsdurchmesser und die Bohrungsanzahl kann die überströmende Abgasmenge variiert und eingestellt werden.

Die Abluftplatte 2 ist ähnlich wie die Abgasplatte aufgebaut. Hier gelangt die Abluft aus dem Stapel ebenfalls über einen Verteilerraum in die Abluftkanäle. Das aus den Bohrungen der Abgasplatte strömende Gas wird von oben in die Abluft eingeleitet. Aufgrund der hohen Temperatur der beiden Medien setzt an der Einströmstelle eine spontane Verbrennung der im Anodenabgas enthaltenen brennbaren Komponenten ein. Durch eine Variation der Kanaltiefe in der Abluftplatte kann die Verweilzeit der Gase im Nachverbrenner angepasst werden, um eine vollständige Verbrennung aller Komponenten zu gewährleisten. Im Falle einer reduzierten Betriebstemperatur des Stapels kann die Oberfläche des Strömungskanals in der Abluftplatte mit einer Edelmetallbeschichtung versehen werden. Durch diese Maßnahme kann eine katalytische Verbrennung bei niedriger Temperatur durchgeführt werden.

Die Abgasplatte und die Abluftplatte bilden eine Nachverbrennereinheit. Der gesamte Nachverbrenner wird aus einer variablen Anzahl dieser Einheiten aufgebaut. Durch diesen modularen Aufbau kann der Nachverbrenner den Stapel-Leistungsklassen angepasst werden. Die beiden Platten untereinander und die hieraus gebildeten Nachverbrennereinheiten werden so miteinander verbunden, dass ein Entweichen der Gase nach außen ausgeschlossen wird.

Die Ausführungsform des Nachbrenners, die in Figur 2b gezeigt wird, besitzt einen ähnlichen Aufbau wie die des Nachbrenners aus Figur 2a. Die Abluftplatte 2 bleibt unverändert. Bei der Abgasplatte 3 werden die Strömungskanäle und Bohrungen durch ein poröses Material 4 (z. B. poröse Keramik, gesintertes oder aufgeschäumtes Metall) ersetzt. Dieses Material übernimmt sowohl die Strömungsverteilung des Abgases in der Ebene als auch das gleichmäßige Einleiten des Abgases in die Abluftebene. Durch die Auswahl von geeigneten Materialien, im Hinblick auf Porengröße, Porenanzahl und Porenverteilung kann der Druckverlust und die in die Abluft übergeleitete Abgasmenge eingestellt werden. Das poröse Material 4 wird durch ein stoffschlüssiges Verbindungsverfahren (z. B. Löten, Schweißen, etc.) an den Berührungsstellen mit der Abgasplatte zusammen gefügt. Durch diese Maßnahme wird ein unkontrolliertes Einströmen des Abgases in den Abluftstrom vermieden. Auch hier können die Oberflächen mit einem katalytisch aktiven Material versehen werden. Eine Anpassung an die Stack-Leistungsklassen ist durch die Veränderung der Anzahl der Einheiten, wie oben beschrieben, möglich.

### Vorreformer als zusätzliches, direkt an den Hochtemperatur-Brennstoffzellenstapel angeschlossenes Bauteil.

Die kompakte Bauweise eines Vorreformers erlaubt es, den Stack direkt - ohne zusätzliche Verrohrung und Isolation - auf den Nachverbrenner aufzusetzen. Hierdurch entsteht ein sehr kompakter Aufbau mit reduzierter Oberfläche (geringerer Wärmeverlust, geringeres Volumen und Gewicht und damit geringere Kosten) und einfacher Ankopplung an den Stack. Dies erlaubt eine einfache Beheizung der endothermen Reformierungsreaktion durch die Plattenwärmetauscherstruktur, durch die das heiße Abgas des Stacks hindurchgeleitet werden kann.
Um dieses Design zu realisieren, ist ein effizienter plattenförmiger Katalysator erforderlich. Das Anodensubstrat der SOFC-Zellen erfüllt neben den Anforderungen bzgl. elektrochemischer Aktivität und mechanischer Stabilität auch diejenigen eines Reformierungskatalysators. Dieses Substrat wird als Katalysator in den plattenförmigen Reformer eingebaut.

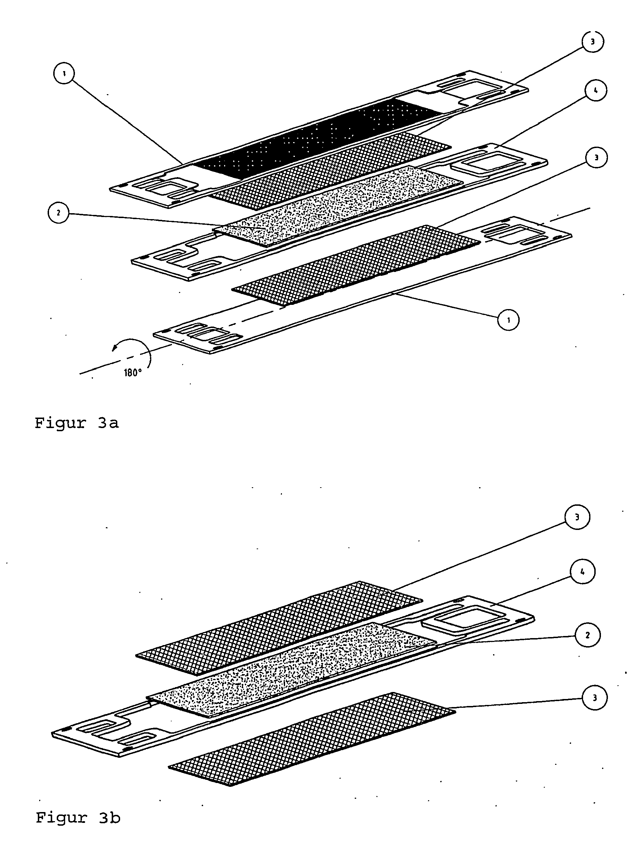

Die Figur 3a zeigt einen beheizten Reformer als zusätzliches Bauteil. Dabei wechseln sich je eine Brenngas- und Abgasebene ab. Die Trennung der beiden Gasräume wird jeweils von der Reformerplatte 1 übernommen, wobei die Reformerplatte 1 gegebenenfalls um 180° um die Längsachse gegenüber der benachbarten Reformplatte gedreht angeordnet ist. Diese Metallplatte übernimmt zudem die Aufgabe, den Abgasstrom zur Beheizung durch den Reformer zu leiten. Aus diesem Grund sind auf einer Plattenseite Gasverteiler- und Sammlerstrukturen sowie mehrere Strömungskanäle eingearbeitet.
Das Brenngasgemisch muss an das Katalysatormaterial, welches aus dem Anodensubstrat 2 der Hochtemperatur-Brennstoffzelle besteht, herangeführt werden. Um dieses Anodensubstrat in dem Reformeraufbau zu fixieren, wird es in einen Metallrahmen 4 eingelegt. Damit das Brenngasgemisch mit dem Katalysatormaterial in Verbindung treten kann, wird auf der Ober- und der Unterseite des Anodensubstrates jeweils ein Drahtgewebe 3 eingelegt. Durch die punktförmige Auflagefläche der Drahtgewebe wird eine ausreichend große Reaktionsfläche zwischen Katalysatormaterial und Brenngas gewährleistet. Diese Drahtgewebe übernehmen gleichzeitig die Funktion der Strömungsführung des Brenngases.

Alternativ könnten in der Reformerplatte auch auf der zweiten Seite Verteilerstrukturen und Strömungskanäle eingearbeitet werden, welche die Funktion der Drahtgewebe übernehmen könnten. Der Metallrahmen, die Drahtgewebe sowie das Anodensubstrat bilden die Brenngasseite des Reformers. Zwei Reformerplatten mit Kanalstruktur bilden jeweils den Abschluss zur Abgasseite des Reformers hin. Diese fünf Bauteile bilden die Reformereinheit. Der gesamte Reformer wird aus einer variablen Anzahl dieser Einheiten aufgebaut. Durch diesen modularen Aufbau kann der Reformer den Stack-Leistungsklassen angepasst werden. Die Reformerplatte, der Reformerrahmen und die Reformereinheiten werden so verlötet, dass ein Entweichen der Gase nach außen bzw. ein Vermischen der Gasströme innerhalb des Reformers ausgeschlossen wird.

Figur 3b zeigt einen unbeheizten Reformer als zusätzliches Bauteil. Der Reformer besitzt einen mit Skizze I vergleichbaren plattenförmigen Aufbau. Allerdings fehlen die Ebenen für die Abgasseite, da der Reformer adiabat betrieben wird. Dies vereinfacht den Aufbau des Reformers und eignet sich besonders für den Betrieb bei ausreichend vorgewärmtem Brenngas und moderater Reformierungsrate.

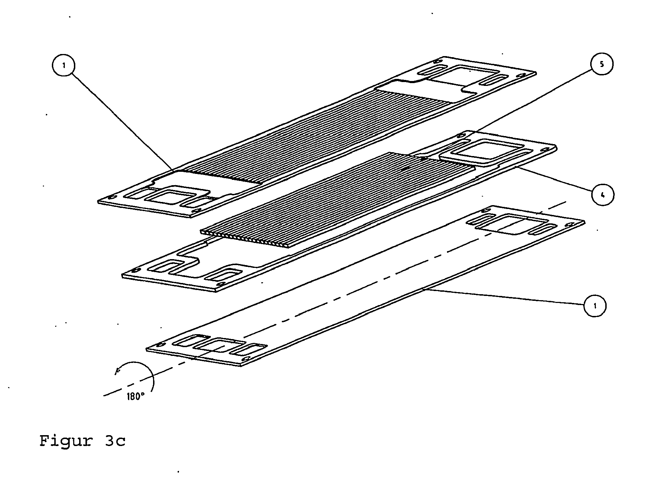

In Figur 3c wird die Strömungsführung in der Katalysatorplatte gezeigt. Der Reformer besitzt einen mit Figur 3a oder Figur 3b vergleichbaren plattenförmigen Aufbau. Allerdings werden die zur Strömungsführung und - verteilung verwendeten Netze ersetzt durch Nuten bzw. Kanäle, die in dem Katalysatormaterial eingearbeitet sind. Dies kann bereits beim Herstellungsprozess, als auch nachträglich durch mechanische Bearbeitung erfolgen. Hierdurch wird die Anzahl der Bauteile weiter reduziert und gleichzeitig die mit dem zu reformierenden Gas in Kontakt stehende Oberfläche vergrößert, wodurch die Effizienz weiter steigt.

### Erfindungsgemäße Ausführungsform: Kombination aus Nachbrenner, Wärmetauscher und Vorreformer als zusätzliche Bauteile, die direkt an den Hochtemperatur-Brennstoffzellenstapel angekoppelt sind.

Die Ausführungsform der Erfindung sieht vor, nicht nur ein Bauteil, sondern mehrere, nämlich die drei Bauteile Nachverbrenner, Luftvorwärmer und Reformer direkt an einen Hochtemperatur-Brennstoffzellenstapel anzukoppeln. Dadurch wird der Vorteil der kompakten Bauweise nochmals gesteigert. Die direkte Anbindung spart Kosten bei der Installation und spart Rohrleitungen ein. Die kurzen Wege der Gase und Betriebsmittel zwischen den Bauteilen und dem Stapel führen zu einem effektiveren Wärmeübergang und erhöhen somit die Effizient des gesamten Systems.

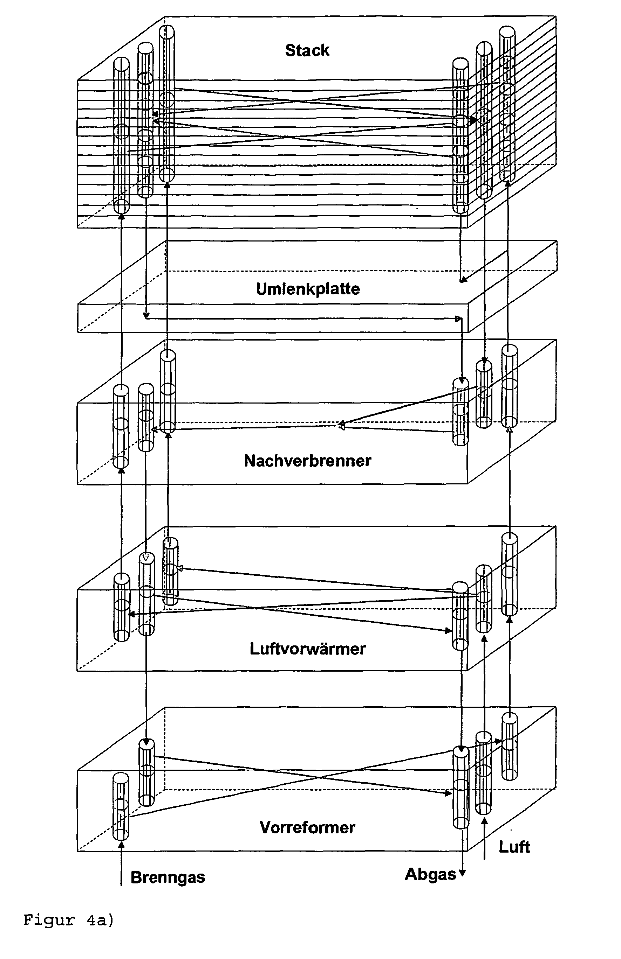

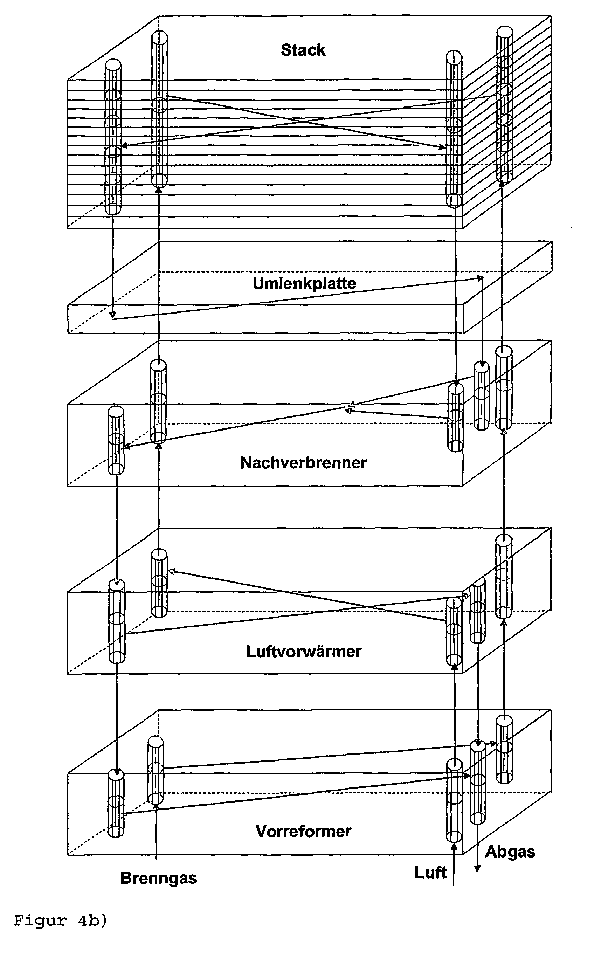

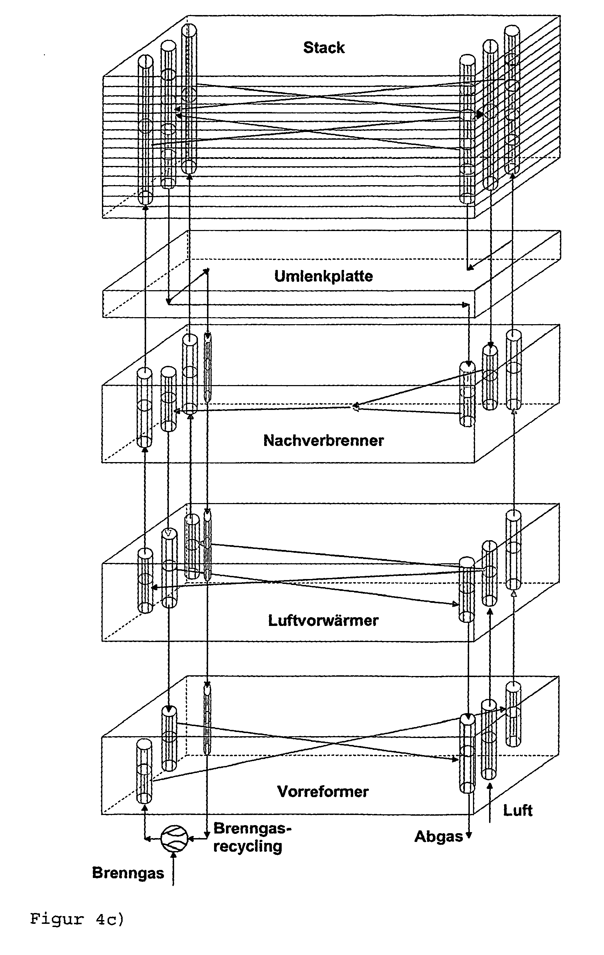

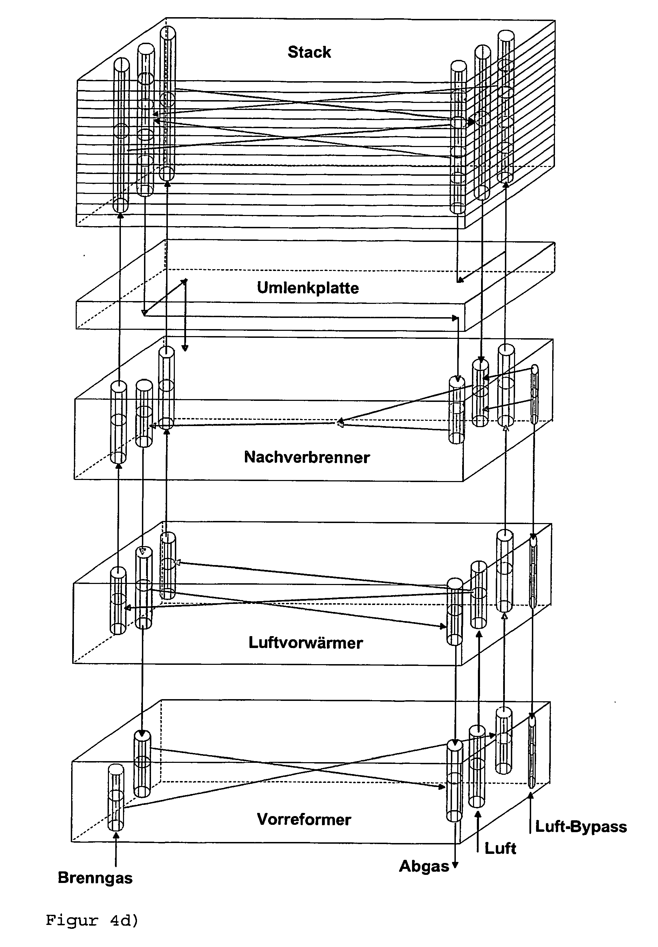

Die Figuren 4 zeigen die Ausführung des modularen Systems. An den Hochtemperatur-Brennstoffzellenstapel grenzt über eine Umlenkplatte (Zwischenverbindung) ein Nachbrenner. An diesen schließt sich ebenfalls direkt ein Wärmetauscher und ein Reformer an. Die Kanäle (Bohrungen) für die einzelnen Gase und Betriebsstoffe sind bei allen zusätzlichen Bauteilen an ähnlicher Position, so dass vorteilhaft keine weiteren Umlenkplatten zwischen den einzelnen Bauteilen benötigt werden. Die Ankopplung der einzelnen Bauteile untereinander, wie auch des ersten Bauteils an den Stapel, erfolgt beispielsweise direkt über eine Fügeverbindung mittels Glas- bzw. Metalllot.

Mit in den Figuren 4a) bis 4d) sind schematisch die einzelnen Gasströme eingezeichnet, die zu oder von dem Brennstoffzellenstapel auf kurzem Weg durch die einzelnen Bauteile geführt werden.

Figur 4a): Nachverbrenner, Luftvorwärmer und Vorreformer werden über eine Umlenkplatte, in der das Brenngas an zwei Stellen umgelenkt wird, an die Unterseite des Stacks angebunden. Die Gasführung ist an die Gasführung im Stack angepasst, in dem Brenngas und Luft jeweils durch zwei Kanäle einströmen und durch einen Kanal ausströmen.

Figur 4b): Nachverbrenner, Luftvorwärmer und Vorreformer werden über eine Umlenkplatte, in der das Brenngas an einer Stelle umgelenkt wird, an die Unterseite des Stacks angebunden. Die Gasführung ist an die vereinfachte Gasführung im Stack angepasst, in dem Brenngas und Luft jeweils durch einen Kanal einströmen und durch einen Kanal ausströmen.

Figur 4c): Nachverbrenner, Luftvorwärmer und Vorreformer werden über eine Umlenkplatte, in der das Brenngas umgelenkt wird, an die Unterseite des Stacks angebunden. Um die Brenngasnutzung im System auf einfache Weise zu erhöhen, ist es wünschenswert, einen Teil des Brenngases, das unverbraucht aus dem Stack austritt, dem frischen Brenngas wieder zuzumischen. Dieses Brenngasrecycling kann auf einfache Weise ohne aufwändige Verrohrung realisiert werden, wenn in der Umlenkplatte ein Abzweigkanal realisiert wird. Über diesen wird dann über zusätzliche Bohrungen in den übrigen Komponenten ein Teil des Abgases zur Bodenplatte geleitet, wo es über eine kurze Verrohrung (z. B.) einer Strahlpumpe zugeführt wird, in der es mit dem frischen Brenngas gemischt wird.

Figur 4d): Nachverbrenner, Luftvorwärmer und Vorreformer werden über eine Umlenkplatte, in der das Brenngas umgelenkt wird, an die Unterseite des Stacks angebunden. Um erforderlichenfalls die Temperatur im Nachverbrenner zu reduzieren, gibt es die Möglichkeit der heißen Abluft kalte Frischluft zuzumischen. Dieses Zumischen kann auf einfache Weise ohne aufwändige Verrohrung realisiert werden, wenn in den Komponenten eine zusätzliche Bohrung eingebracht wird, über die diese Zusatzluft der Abluft am Eintritt in den Nachverbrenner zugemischt wird.

## Patentansprüche

1. Hochtemperatur-Brennstoffzellensystem umfassend
einen planaren Hochtemperatur-Brennstoffzellenstapel, bei dem die Betriebsmittelzu- bzw. -abführungsleitungen senkrecht zu den Endplatten des Stapels angeordnet sind,
sowie weitere Bauteile, welche strömungstechnisch direkt an einer Endplatte des Stapels angekoppelt sind, wobei die äußeren Abmessungen der Bauteile an die Geometrie des Brennstoffzellenstapels bezüglich der aneinander grenzenden Flächen angepasst sind,
**dadurch gekennzeichnet,**
- **dass** es sich bei den Bauteilen um modular aufgebaute Bauteile in Form eines Nachverbrenners, eines Luftvorwärmers und eines Reformer handelt,
- **dass** diese Bauteile in der Reihenfolge "Nachverbrenner - Luftvorwärmer - Reformer" angeordnet sind, und
- **dass** in das Reformerteil wenigstens zwei in Teilströme aufgeteilte Abgasleitungen des Nachverbrenners münden, von denen eine Leitung direkt durch das Reformerbauteil geführt ist, während die zweite Leitung innerhalb des Reformers als Wärmetauscher für die Reformierungsreaktion des Brenngases ausgestaltet ist..

2. Hochtemperatur-Brennstoffzellensystem nach Anspruch 1,
bei dem zwischen dem ersten Bauteil und dem Hochtemperatur-Brennstoffzellenstapel eine Zwischenplatte angeordnet ist, deren äußeren Abmessungen an die Geometrie des Brennstoffzellenstapels bezüglich der aneinander grenzenden Flächen angepasst sind.

3. Hochtemperatur-Brennstoffzellensystem nach Anspruch 1 oder 2, mit einem Plattenwärmeaustauscher als Wärmeaustauscher.

4. Hochtemperatur-Brennstoffzellensystem nach Anspruch 1 bis 3, mit einem plattenförmigen Katalysator aus Anodensubstrat.

5. Hochtemperatur-Brennstoffzellensystem nach Anspruch 1 bis 4, bei dem eine Anodenabgasleitung und eine Kathodenabgasleitung in den Nachbrenner münden.

6. Hochtemperatur-Brennstoffzellensystem nach Anspruch 1 bis 5, mit einem plattenförmigen Nachbrenner.

7. Verfahren zum Betreiben eines Hochtemperatur-Brennstoffzellensystems gemäß einem der Ansprüche 1 bis 6,
bei dem die Beheizung des Reformers über einen Teilstrom des aus dem Nachverbrenner austretenden nachverbrannten Brenngases erfolgt.

8. Verfahren zum Betreiben eines Hochtemperatur-Brennstoffzellenstapels nach Anspruch 7 bis 8,
bei dem die in dem Nachbrenner erzeugte Wärmemenge teilweise zur Reformierung des frischen Brenngases und teilweise zur Vorwärmung der Frischluft genutzt wird.

9. Verfahren zum Betreiben eines Hochtemperatur-Brennstoffzellenstapels nach Anspruch 7 bis 9,
bei dem das nicht umgesetzte Brenngas aus den Anodenräumen des Brennstoffzellenstapels zusammen mit dem Kathodenabgas in dem Nachverbrenner verbrannt wird.

## Claims

1. High temperature fuel cell system comprising
a planar high temperature fuel cell stack, in which the operating equipment inlet or outlet pipes are arranged perpendicular to the end plates of the stack,
as well as further components, which hydraulically are connected directly to one end plate of the stack, in which the external dimensions of the components are adapted to the geometry of the fuel cell stack with reference to areas bordering each other,
**characterised in that**
- the components are modularly built components in the form of an afterburner, an air preheater and a reformer,
- these components are arranged in the sequence "afterburner - air preheater - reformer" and
- at least two exhaust gas pipes of the afterburner, which are divided into partial flows, come out into the reformer part, of which one pipe is taken directly through the reformer component, whilst the second pipe inside the reformer is made as a heat exchanger for the reforming reaction of the fuel gas.

2. High temperature fuel cell system according to claim 1,
in which an intermediate plate is arranged between the first component and the high temperature fuel cell stack, the external dimensions of which are adapted to the geometry of the fuel cell stack with reference to areas bordering each other.

3. High temperature fuel cell system according to claim 1 or 2 with a plate heat exchanger as heat exchanger.

4. High temperature fuel cell system according to claim 1 to 3 with a plate shaped catalyst made from anode substrate.

5. High temperature fuel cell system according to claim 1 to 4, in which an anode exhaust gas pipe and a cathode exhaust gas pipe come out into the afterburner.

6. High temperature fuel cell system according to claim 1 to 5 with a plate shaped afterburner.

7. Method for operating a high temperature fuel cell system according to one of claims 1 to 6,
in which the reformer is heated through a partial flow of the fuel gas, which has been reheated, coming out of the afterburner.

8. Method for operating a high temperature fuel cell stack according to claim 7 to 8, in which the volume of heat produced in the afterburner is used partly to reform the fresh fuel gas and partly to preheat the fresh air.

9. Method for operating a high temperature fuel cell stack according to claim 7 to 9, in which the fuel gas, which has not been converted, coming out of the anode areas of the fuel cell stack is combusted together with the cathode exhaust gas in the afterburner.

## Revendications

1. Système de cellules à combustible à haute température, comprenant :
une pile planaire de cellules à combustible à haute température, où les conduites d'amenée et d'évacuation des matières d'exploitation sont disposées perpendiculairement aux plaques d'extrémité de la pile,
ainsi que d'autres composants hydrodynamiquement directement accouplés à une plaque d'extrémité de la pile, les dimensions extérieures des composants étant adaptées à la géométrie de la pile de cellules à combustible quant aux surfaces contiguës l'une à l'autre,
**caractérisé**
- **en ce que** les composants sont des composants à structure modulaire sous la forme d'un dispositif de postcombustion, d'un réchauffeur d'air et d'un reformeur,
- **en ce que** ces composants sont disposés suivant l'ordre « dispositif de postcombustion - réchauffeur d'air - reformeur », et
- **en ce qu'**au moins deux conduites d'échappement du dispositif de postcombustion divisées en flux partiels débouchent dans le composant reformeur, une première de ces conduites étant directement guidée au travers du composant reformeur, alors que la deuxième conduite est réalisée à l'intérieur du reformeur comme échangeur de chaleur pour la réaction de reformation du gaz de combustion.

2. Système de cellules à combustible à haute température selon la revendication 1,
où une plaque intercalaire est disposée entre le premier composant et la pile de cellules à combustible à haute température, dont les dimensions extérieures sont adaptées à la géométrie de la pile de cellules à combustible quant aux surfaces contiguës l'une à l'autre.

3. Système de cellules à combustible à haute température selon la revendication 1 ou la revendication 2, avec un échangeur de chaleur à plaques en tant qu'échangeur de chaleur.

4. Système de cellules à combustible à haute température selon les revendications 1 à 3, avec un catalyseur en forme de plaque en substrat anodique.

5. Système de cellules à combustible à haute température selon les revendications 1 à 4, où une conduite d'échappement anodique et une conduite d'échappement cathodique débouchent dans le dispositif de postcombustion.

6. Système de cellules à combustible à haute température selon les revendications 1 à 5, avec un dispositif de postcombustion en forme de plaque.

7. Procédé d'exploitation d'un système de cellules à combustible à haute température selon l'une des revendications 1 à 6,
où le chauffage du reformeur est effectué par un flux partiel du gaz de combustion post-brûlé sortant du dispositif de postcombustion.

8. Procédé d'exploitation d'un système de cellules à combustible à haute température selon les revendications 7 et 8,
où la quantité de chaleur générée dans le dispositif de postcombustion est en partie utilisée pour la reformation du gaz de combustion frais et en partie pour le réchauffage de l'air fais.

9. Procédé d'exploitation d'un système de cellules à combustible à haute température selon les revendications 7 à 9,
où le gaz de combustion non transformé des compartiments anodiques de la pile de cellules à combustible est brûlé dans le dispositif de postcombustion avec le gaz d'échappement cathodique.
